# EUROPEAN PATENT APPLICATION

(11) **EP 2 070 428 A1**
(43) Date of publication of application: **17.06.2009**
(21) Application number: 08020213.8
(22) Date of filing: 20.11.2008
(51) Int. Cl.: A23K 1/16, A23K 1/18

(54) **Use of a composition comprising sesquiterpenes from curcuma essential oil and/or tea tree oil in the manufacture of an animal feed**

(30) Priority: 11.12.2007 EP 07023953
(71) Applicant: DSM IP Assets B.V., 6411 TE Heerlen (NL)
(72) Inventor: Frehner, Marco, 1185 Mont-sur-Rolle (CH); Losa, Riccardo, 1145 Biére (CH); Schuepfer, Patrick, 1020 Renens (CH)
(74) Representative: Schwander, Kuno

(57) **Abstract**

The present invention relates to the use of a natural composition comprising sesquiterpenes from curcuma essential oil and/or tea tree oil in the manufacture of animal feed for the alleviation, cure or prevention of diseases caused by *Clostridium sp* - particularly *Clostridium perfringens* - in animals, such as poultry and mammals, The composition also improves the digestibility of the feed and the growth rate of the animals.

## Description

The present invention relates to the use of a composition comprising sesquiterpenes from curcuma essential oil and/or tea tree oil in the manufacture of animal feed for the alleviation, cure or prevention of diseases caused by *Clostridium sp -* particularly *Clostridium perfringens -* in animals, such as poultry and mammals. The composition also improves the digestibility of the feed and the growth rate of the animals.

Diseases caused by *Clostridium sp* are common in animal stocks of poultry, pigs, rabbits and rats. There is for example, a link between the disease necrotic enteritis and the presence of *Clostridium perfringens,* Necrotic enteritis is characterized by severe inflammation and sloughing of the intestinal tracts and often occurs together with coccidiosis.

Many articles have disclosed the amount of *Clostridium perfringens* in the digestive tracts to have considerable impact on the health and growth rate of a broiler. Typical symptoms of infected birds are; ruffled feathers, noticeable depression, loss of appetite, loose/runny droppings or diarrhoea and a marked reluctancy to move. Examples of such articles are B.S. Bains (1979) "A manual for poultry diseases" (Ed, Roche, Basel Switzerland); B Köhler, K Vogel and P Starost (1979) "Nekrotisierende und Ulzerative Enteritis bei Hühnern der Mast- und Legerichtung unter Bedingungen industriemässiger Geflügelproduktion" (Mh. Vet.-Med., 32, 704-711); B Köhler, K Vogel, W Witte and H Kühn (1983) "Vergleich der Ursachen von Hospitalismus durch Cl. perfringens, Staphylococcus aureus und Salmonellen unter den Bedingungen der industriemässigen Geflügelproduktion und Möbglichkeiten ihrer Bekämpfung", (V. Intern. Tierhyg. Symposium, 25 und 26.05.93, Leipzig, Sammelband der Vorträge, Veterinärmedizinische Fakultät Leipzig); Th. Vissienon, U Johannsen and B Köhler (1994) "Untersuchungen zur Pathologie und Pathogenese der Clostridium perfringens-Typ-A-Enterotoxämie des Huhnes. 1. Versuche zur experimentellen Erzeugung der Krankheit, Versuchsansatz, klinisches Bild und Moralitätsraten", (Mh. Vet.-Med., 49, 23-28); Th. Vissienon, U Johannsen, M Solveig and B Köhler (1994) "Untersuebungen zur Pathologie und Pathogenese der Clostridium-perfringens-Typ-A-Enterotoxämie des Huhnes. 2. Pathomorphologische und bakteriologische Befunde nach experimenteller intraduodenaler Cl.-perfringens-Typ-A-Infektion" (Sporen und vegetative Keime) und Toxinapplikation (Mh. Vet.-Med., 49, 93-102).

A feed additive containing the active mixture of the present invention for the reduction of coccidiosis has previously been disclosed in WO 96/13175, but this feed additive also contains, as a necessary ingredient, a surface active emulsifying agent.

A wide spectrum of antibiotics, such as penicillin, bacitracin and furazolidone are used in treatment of *Cl. perfringens* induced diseases. Where the disease is endemic, preventive medication is often added to the animal feed. However, in recent years there has been intense debate about the use of chemical and antibiotic growth promoters and in many countries a ban on this type of feed additives is being considered or already in place. Thus, there is an urgent need for agriculture to develop substances which are in line with reliable and generally accepted practice and not of a medicinal nature,

One objective of the present invention is to provide an animal feed which contains a composition for the cure, prevention or alleviation of the negative effects of *Clostridia* on animals. Another objective is to improve the digestibility of the animal feed and thereby hamper or reduce the growth of *Clostridium sp.* A third objective is to reduce the negative effects on the animal growth caused by the presence of *Clostridium sp.*

According to the invention it has been found that these objectives can be achieved by using an animal feed, which contains an effective amount of a composition comprising sesquiterpenes from curcuma essential oil and/or tea tree oil for the alleviation, cure or prevention of diseases caused by *Clostridium sp.*

Terpenes are widespread in nature, mainly in plants as constiuents of essential oils. Their building block is the hydrocarbon isoprene (C5H8). Hence, Terpenes are compounds whose carbon skeleton can be divided into two or more units of an isoprene carbon skeleton. Monoterpenes, consisting of two units of isoprene, are often the main constituents of essential oils. Sesquiterpenes are defined as the group of 15 carbon compounds derived by the assembly of three isoprenoid units, and they are found mainly in higher plants. Sesquiterpene structures present several acyclic, mono-, bi-, tri-, and tetracyclic systems.

The composition according to the invention comprises a mixture of monoterpenes and sesquiterpenes wherein the ratio of sesquiterpenes to monoterpenes is between 1:2 to 1:20, for example 1:3.5 for a composition which derives from curcuma essential oil and 1:16 for a composition from tea tree oil.

Main mono terpenes of tea tree oil are α- terpinene, γ- terpinene, p-cymene and terpinen-4-ol. The Australian Standard for tea tree oil (AS 2782:1985) requires the 1,8-cineole level to be below 15% and the terpen-4-ol content above 30%. ISO 4730 set a standard of proportional requirements of composition as follows:

| COMPONENT | % MIN | % MAX |
|---|---|---|
| α- pinene | 1.0 | 6.0 |
| Sabinene | Tr. | 3.5 |
| α- terpinene | 5.0 | 13.0 |
| limonene | 0.5 | 4.0 |
| p-cymene | 0.5 | 12 |
| 1,8-cineole | None | 28.0 |
| γ- terpinene | 10.0 | 28.0 |
| terpinolene | 1.5 | 28.0 |
| terpinen-4-ol | 30.0 | no max |
| α- terpineol | 1.5 | 8.0 |
| aromadendrene | Tr. | 7.0 |
| δ-cadinene | Tr. | 8.0 |
| globulol | Tr. | 3.0 |
| Viridiflorol | Tr. | 1.5 |

Turmeric contains an essential oil (max. 5%), which contains a variety of sesquiterpenes, many of which are specific for the species. Most important for the aroma of turmeric are turmerone (max. 30%), ar-turmerone (25%) and zingiberene (25%). Conjugated Diarylheptanoids (1,7-diaryl-hepta-1,6-diene-3,5-diones, e.g. curcumin) are responsible for the orange colour and probably also for the pungent taste (3 to 4%).

The Jawanese species C. xanthorrhiza contains 6 to 11 % essential oil, which is dominated by 1-cyclo-isoprenemyrcene (up to 85%); it furthermore contains a phenolic sesquiterpene missing from C. longa, xanthorrizol, which makes up max. 20% of the essential oil.

By the expression sesquiterpenes in this context, a substance is understood consisting of compounds occurring in nature, and obtained from natural products.

The composition derived from curcuma essential oil preferably comprise mixture of turmerone, ar-turmerone, alpha-zingiberene and thymol as main ingredients. The composition derived from tea tree oil preferably comprises a mixture of γ- terpinene, terpinen-4-ol and thymol as main ingredients.

The total amount of these active ingredients may vary within wide limits but is normally from 1 to 500 ppm, preferably between 10 and 100 ppm, calculated on the dry weight of the animal feed. The various active ingredients are all of natural origin, as found in different parts of plants, or obtained through synthesis (nature identical compounds). The animal feed comprising the composition of the invention exhibits excellent effects on necrotic enteritis involving *Clostridium perfringens.* The presence of the composition also improves the digestibility of the animal feed and reduces the negative effects on the animal growth rate caused by the presence of *Clostridium sp.*

To the composition according to the invention further active ingredients can be added, Examples are guaiacol, thymol, piperin, eugenol, capsaicin, tannin, cresol and mixtures thereof. The total amount of these active ingredients may vary within wide limits but is normally from 1 to 500 ppm, preferably between 10 and 100 ppm, calculated on the dry weight of the animal feed. In a preferred embodiment of the invention the compositions derived from curcuma essential oil and tea tree oil preferably further comprise thymol from an additional source, preferably natural source.

In another particular embodiment, the invention relates to methods for using a composition according to the invention in animal feed for improving the Feed Conversion Ratio (FCR) and/or for modulation of the gut microflora, In alternative embodiments, compositions according to the invention improve animal feed digestibility, and/or maintain animal health by aiding in proper digestion and/or supporting immune system function.

The FCR may be determined on the basis of a broiler chicken growth trial comprising a first treatment in which the composition according to the invention is added to the animal feed in a suitable concentration per kg feed, and a second treatment (control) with no addition of the composition to the animal feed.

As it is generally known, an improved FCR is lower than the control FCR. In particular embodiments, the FCR is improved (i.e., reduced) as compared to the control by at least 1.0%, preferably at least 1.5%, 1.6%, 1,7%, 1.8%, 1.9%, 2.0%, 2.1%, 2,2%, 2.3%, 2.4%, or at least 2.5%.

The term "gut" as used herein designates the gastrointestinal or digestive tract (also referred to as the alimentary canal) and it refers to the system of organs within multicellular animals which takes in food, digests it to extract energy and nutrients, and expels the remaining waste.

The term gut "microflora" as used herein refers to the natural microbial cultures residing in the gut and maintaining health by aiding in proper digestion and/or supporting immune system function.

The term "modulate" as used herein in connection with the gut microflora generally means to change, manipulate, alter, or adjust the function or status thereof in a healthy and normally functioning animal, i.e. a non-therapeutic use.

The incorporation of the composition according to the invention into the animal feed is usually carried out by preparing a premix of the composition and other suitable additives. Such a premix may comprise 2-25% by weight of the composition, 0-40% by weight of other conventional additives, such as flavourings, and 50-98% by weight of any conventional absorbing support. The support may contain, for example, 40-50% by weight of wood fibres, 8-10% by weight of stearin, 4-5% by weight of curcuma powder, 4-5% by weight of rosemary powder, 22-28% by weight of limestone,1-3% by weight of a gum, such as gum arabic, 5-50% by weight of sugar and/or starch and 5-15% by weight of water.

This premix is then mixed with vitamins, enzymes, mineral salts, ground cereals, protein-containing components, carbohydrate-containing components, wheat middlings and/or brans in the preparation of an animal feed additive which contains 0.2-5% by weight of the premix. The animal feed additive is then finally added to the feed in such quantities that the feed will contain 1-500 ppm, preferably 10-100 ppm or 5 -50 ppm of the active ingredients of the composition according to the invention. The animal feed additive normally constitutes 0.3-3.5% by weight of the animal feed.

The animal feed according to the invention usually contains, calculated on the dry weight of the feed, the following ingredients:
a) 0-80%, preferably 10-70%, by weight of cereals,
b) 0-30%, preferably 1-12%, by weight of feed fat,
c) 0-85%, preferably 10-50%, by weight of protein containing nutritious substances of a type other than cereals, and
d) 1-500 ppm, preferably 10-100 ppm or 5-50 ppm of total sesquitexpene(s) from curcuma essential oil and/or tea tree oil.

The total amounts of a)-d) are preferably at least 80% by weight.

When preparing the animal feed, the animal feed additive can be mixed with the dry ingredients consisting of cereals, such as ground or crushed wheat, oats, barley, maize and rice; vegetable protein feed based on e.g. rape- seed, soya bean and sunflower; animal protein feed, such as blood meal, meat and bone meal and fish meal; molasses; and milk products, such as various milk powders and whey powders, After mixing all the dry additives, the liquid ingredients and ingredients, which after heating become liquid, can be added. The liquid ingredients may consist of lipids, such as fat, for example slaughter fat and vegetable fat, optionally liquefied by heating, and/or of carboxylic acids, such as a fatty acid. After thorough mixing, a mealy or particulate consistency is obtained, depending on the degree of grinding of the ingredients. To prevent separation during storage, water should preferably be added to the animal feed, which then is subjected to a conventional pelletising, expanding or extruding process. Any excess water can be removed by drying. If desired, the resulting granular animal feed can also be crushed to a smaller particle size.

Within the scope of the invention, it is also possible to produce a suspension of the animal feed. This is especially convenient if the feed is prepared for immediate consumption.

In a preferred embodiment of the invention the composition derived from curcuma essential oil is admixed with cellulose fibre and silicium oxide, BHT, and piperin. The finale preparation (CEO-composition) contains, in % of the final preparation, thymol, 62.5; Curcuma essential oil, 18.8; meta-cresol, 14.5; and piperin, 4.2.

In another preferred embodiment of the invention the composition derived from tea tree oil is admixed with cellulose fibre and silicium oxide, BHT, and piperin. The final preparation (TTE-composition) contains, in % of the final preparation, thymol, 45.5; tea tree essential oil, 40.9; meta-cresol, 10.5; and piperin, 3.1.

The present invention will now be further illustrated by the following Example.

### Example 1

The efficacy of the composition of the invention to reduce the occurrence of *Clostridium perfringens* was performed on broiler chickens, which were put on commercial diets with the following basic compositions.

**Table 1.**

| Feeding program | Starter feed | Grower feed | Finisher feed |
|---|---|---|---|
| Crude protein, % | 22.5 | 21.1 | 18.3 |
| Crude fat, % | 5.6 | 6.2 | 6.5 |
| Crude fibre, % | 2.7 | 2.6 | 2.5 |
| Crude ash, % | 5.8 | 5.4 | 5.0 |
| ME, MJ/kg | 12.9 | 13.1 | 13.5 |

These diets were formulated by mixing suitable amounts of corn, soyabean meal, barley by-product, lime stone and oil. Starter feed contained also nicarbazin, a traditional anti coccidial, in the ratio of 113 mg per kg of the feed; grower and finisher feeds contained monensin, a traditional anti coccidial, in the ratio of 90 mg per kg of the feed, To the diets administered to a control group (no addition of a composition according to the invention) we also added bacitracin MD, a traditional growth promoter in the ratio of 55 mg per kg of the feed.

To the diet administered to the experimental group we added 22 mg per kg of the feed of the TTE-composition as described above.

The fowls of each of the three groups (negative control group (no addition), positive control group and experimental group) were divided into two sub-groups and fed for 42 days wherein to the birds of all the groups, a mixture of three lyophilized isolates of *Clostridium perfringens,* originally obtained from ATCC, were orally administered on days 21 and 23. The number of colony forming units (CFU) of C. *perfringens* administered to each bird was 3,45x10⁸CFU/bird per day during those two days. All animals were observed daily for clinical signs of infection from *C. perfringens.* On days 28 and 42 of the study, selected animals were euthanized and their digestive tract scored for *C. perfringens* lesions (scale: 0, no lesions; 4, very severe lesions).

The following results were obtained.

**Table 2.**

| | Negative control group | Positive control group | Experimental group |
|---|---|---|---|
| Animals at start, no | 512 | 512 | 512 |
| Bird weight, 42 days, g | | | |
| Growth/day, g | 2272 | 2337 | 2345 |
| Feed conversion rate, 42d | | | |
| Mortality, 42d, % | 53.1 | 54.7 | 54.9 |
| Lesion score, 28d | 1.914 | 1.850 | 1.836 |
| Lesion score, 42d | 2.08 | 1.67 | 1.04 |
| | 3.00 | 1.69 | 1.50 |
| | 2.44 | 1.00 | 0.38 |

The results clearly demonstrate that the growth rate of the fowls was improved by the addition of the composition according to the invention in comparison to the growth obtained with traditional feed without additive. Furthermore, the feed conversion rate (feed intake/increase in weight) was also improved when the animal feed according to the invention was used. From the results it is further evident that the composition of the invention had an *in vivo* bacteriostatic effect on *Clostridium perfringens.*

### Example 2

The efficacy of the composition of the invention to reduce the occurrence of *Clostridium perfringens* was repeated on broiler chickens, which were put on commercial diets with the following basic compositions.

**Table 3.**

| Feeding program | Starter feed | Grower feed | Finisher feed |
|---|---|---|---|
| Crude protein, % | 21.4 | 19.6 | 17.1 |
| Crude fat, % | 5.9 | 6.6 | 7.1 |
| ME, MJ/kg | 13.0 | 13.4 | 13.7 |

These diets were formulated by mixing suitable amounts of com, soyabean meal, bone meal and oil. Starter feed contained also monensin, a traditional anti coccidial, in the ratio of 90 mg per kg of the feed; grower and finisher feeds contained monensin, a traditional anti coccidial, in the ratio of 90 mg per kg of the feed. To the diets administered to a positive control group (no addition of a composition according to the invention) we also added bacitracin MD, a traditional growth promoter in the ratio of 55 mg per kg of the feed.

To the diet administered to the experimental group I we added 22 mg per kg of the feed of the TTE-composition as described above.

To the diet administered to the experimental group II we added 16 mg per kg of the feed of the CEO-composition as described above.

The fowls of each of the five groups (negative control group (no addition), positive control group, experimental group I, experimental group II, and unexposed negative control group) were fed for 49 days wherein a mixture of three lyophilized isolates of *Clostridium perfringens,* originally obtained from ATCC, were orally administered on days 23, 24, 25 and 26 to the first four of the mentioned groups of birds. The number of colony forming units (CFU) of *C*. *perfringens* administered to each bird was 3,45x 10⁸CFU/bird per day during those four days. All animals were observed daily for clinical signs of infection from *C. perfringens.* On days 28 and 3 5 of the study, selected animals were euthanized and their digestive tract scored for *C*. *perfringens* lesions (scale: 0, no lesions; 4, very severe lesions).

The following results were obtained.

**Table 4.**

| | Control groups | | Experimental groups | | Unexposed negative control group |
|---|---|---|---|---|---|
| | Negative | Positive | I | II | No C. *perfringens* |
| Animals at start, no | 540 | 540 | 540 | 540 | 540 |
| Bird weight, 49 days, g | 2187 | 2270 | 2404 | 2394 | 2433 |
| Growth/day, g | 43.8 | 45.5 | 48.2 | 48.0 | 48.8 |
| Feed conversion rate, 49d | 2.214 | 2.014 | 1.921 | 1.902 | 1.920 |
| Mortality, 49d, % | 14.2 | 8.2 | 10.0 | 5.6 | 7.0 |
| Lesion score, 28d | 2.35 | 1.15 | 1.05 | 0.85 | 0.0 |
| Lesion score, 35d | 2.15 | 1.40 | 1.40 | 1.35 | 0.0 |

The results clearly demonstrate that the growth rates of the fowls was improved by the addition of the compositions according to the invention in comparison to the growth obtained with traditional feed without additives. Furthermore, the feed conversion rate (feed intake/increase in weight) was also improved when the animal feed according to the invention was used; indeed, the birds from groups fed the feed according to the invention and exposed to C. *perfringens* showed very similar performances as those from an unexposed group fed with a traditional feed without additive. From the results it is further evident that the compositions of the invention have an *in* vivo bacteriostatic effect on *Clostridium perfringens.*

## Claims

1. Use of a composition comprising sesquiterpenes as found in curcuma essential oil and/or tea tree oil in the manufacture of animal feed for the alleviation, cure or prevention of diseases caused by *Clostridium sp.*

2. Use according to claim 1, wherein the animal feed contains
a) 0-80%, preferably 10-70%, by weight of cereals,
b) 0-30%, preferably 1-12%, by weight of feed fat,
c) 0-85%, preferably 10-50%, by weight of protein containing nutritious substances of a type other than cereals, and
d) 1-500 ppm, preferably 10-100 ppm or 5-50 ppm of total sesquiterpene(s) from curcuma essential oil and/or tea tree.

3. Use according to claim 1 or 2 for the alleviation, cure or prevention of necrotic enteritis.

4. Use according to any of the claims 1-3, wherein the composition additionally comprises at least one compound selected from the group consisting of guaiacol, thymol, eugenol, capsaicin, tannin and cresol.

5. Use of a compound according to any of claims 1-4 for the preparation of compositions for improving the performance of animals, especially having an activity as modulators of the gastrointestinal microflora of animals and which are applicable via animal feed.

6. Use according to any one of the claims 1-5 in the manufacture of a poultry feed.

7. Animal feed, **characterized in, that** it contains 1-500 ppm, preferably 10-100 ppm or 5-50 ppm calculated on the dry weight of a composition comprising sesquiterpenes as found in curcuma essential oil and/or tea tree oil.

8. Animal feed according to claim 7, **characterized in, that** it contains
a) 0-80%, preferably 10-70%, by weight of cereals,
b) 0-30%, preferably 1-12%, by weight of feed fat,
c) 0-85%, preferably 10-50%, by weight of protein containing nutritious substances of a type other than cereals,

9. Animal feed according to claim 7 or 8, which improves animal feed utilization by improving the feed conversion ratio (FCR), and/or modulating the gut microflora.

10. Animal feed according to any of the claims 7-9, which is a poultry feed.

11. A premix, **characterized in, that** it contains
a) a composition comprising sesquiterpenes as found in curcuma essential oil and/or tea tree oil in such quantities that the final animal feed will contain 1-500 ppm, preferably 10-100 ppm of the active ingredients of the composition,
b) 0-30% by weight of other conventional additives, including flavourings, and
c) 50-98% by weight of an absorbing support.
